# EUROPÄISCHE PATENTANMELDUNG

(11) **EP 2 273 244 A2**
(43) Veröffentlichungstag der Anmeldung: **12.01.2011**
(21) Anmeldenummer: 10166974.5
(22) Anmeldetag: 23.06.2010
(51) Int. Cl.: G01H 3/14

(54) **Dosimeter**

(30) Priorität: 09.07.2009 DE 102009027585
(71) Anmelder: HILTI Aktiengesellschaft, 9494 Schaan (LI)
(72) Erfinder: Schmidt, Peer, 9008, St. Gallen (CH); Reinicke, Tamara, 86916, Kaufering (DE); Despineux, Frank, 88045, Friedrichshafen (DE)

(57) **Zusammenfassung**

Das Dosimeter (20) zur Vibrationserfassung, insbesondere für schlagende Handwerkzeugmaschinen, beinhaltet ein Gehäuse (50), ein Befestigungsmittel (51) zum Befestigen des Beschleunigungssensors am Arm, insbesondere am Handgelenk, eines Anwenders, wenigstens einen Beschleunigungssensor (21) in dem Gehäuse und eine Aufzeichnungseinheit (26) zum Aufzeichnen einer Belastung des Anwenders basierend auf durch den Beschleunigungssensor erfasster Vibrationen.

## Beschreibung

### GEBIET DER ERFINDUNG

Die vorliegende Erfindung betrifft ein Dosimeter zum Erfassen einer Vibrationsbelastung von Anwendern, insbesondere von Handwerkzeugmaschine.

Schläge von schlagende Handwerkzeugmaschinen üben auf einen Anwender eine andauernde Belastung aufgrund von Vibrationen auf. Die Belastungen werden mit Krankheitsbildern in Verbindung gebracht. Es wurden Grenzwerte ermittelt, die nicht überschritten werden sollten, um einen Anwender vor einer möglichen gesundheitlichen Schädigung zu bewahren. Die Grenzwerte berücksichtigen die Dauer einer Einwirkung der Belastung und die Stärke der Vibrationen.

Ein Dosimeter zum Erfassen einer aktuellen oder akkumulierten Belastung kann in eine Handwerkzeugmaschine integriert werden. Dies erfordert jedoch einen hohen Investitionsbedarf für die Anwender.

### OFFENBARUNG DER ERFINDUNG

Eine Aufgabe ist, ein nachrüstbares Dosimeter bereitzustellen, das ggf. auch für mehrere Handwerkzeuggeräte einsetzbar ist.

Das erfindungsgemässe Dosimeter zur Vibrationserfassung, insbesondere für schlagende Handwerkzeugmaschinen, beinhaltet ein Gehäuse, ein Befestigungsmittel zum Befestigen des Beschleunigungssensors am Handgelenk, Unter- oder Oberarm eines Anwenders, wenigstens einen Beschleunigungssensor in dem Gehäuse und eine Aufzeichnungseinheit zum Aufzeichnen einer Belastung des Anwenders basierend auf durch den Beschleunigungssensor erfasster Vibrationen.

Das tragbare Dosimeter kann autark ohne eine spezielle Vorrichtung an der Handwerkzeugmaschine die Vibrationsbelastung bestimmen.

Eine Ausgestaltung sieht vor, dass das Dosimeter eine Auswertungseinrichtung zum Vergleichen erfasster Vibrationen mit einem Schwellwert und eine Zeiterfassungseinrichtung zum Aufzeichnen einer Dauer für die die Vibrationen größer als der Schwellwert sind aufweist.

Eine Ausgestaltung sieht vor, dass das Dosimeter ein drahtloses Empfangsmodul zum Empfangen einer Kenngröße und eine Analyseeinrichtung zum Ermitteln einer normierten Belastung basierend auf der empfangenen Kenngröße und der Dauer für die die Vibrationen größer als der Schwellwert sind. Das drahtlose Empfangsmodul kann eine Leseeinheit für einen RFID-Chip beinhalten.

Eine Ausgestaltung sieht vor, dass die Aufzeichnungseinheit eine Speichereinheit zum Speichern der Dauer und der empfangenen Kenngröße aufweist oder zum Speichern einer von der Analyseeinrichtung ermittelten normierten Belastung.

Ein Verfahren zum Erfassen einer Vibrationsbelastung sieht folgende Schritte vor: Erfassen von Beschleunigungswerten am Arm, insbesondere Handgelenk eines Anwenders; Ermitteln einer Dauer, für die die Beschleunigungswerte einen Schwellwert überschreiten, und Aufzeichnen der Dauer.

Eine Ausgestaltung sieht die weiteren Schritte vor:Auslesen eines RFID-Chips mit einer für eine Handwerkzeugmaschine zugehörigen Kenngröße über deren Vibrationsbelastung; und Bestimmen einer Dosis der Vibrationsbelastung durch die Vibration basierend auf der aufgezeichneten Dauer und der ausgelesenen Kenngröße.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: eine Handwerkzeugmaschine;
- Fig. 2: ein Dosimeter.

### AUSFÜHRUNGSFORMEN DER ERFINDUNG

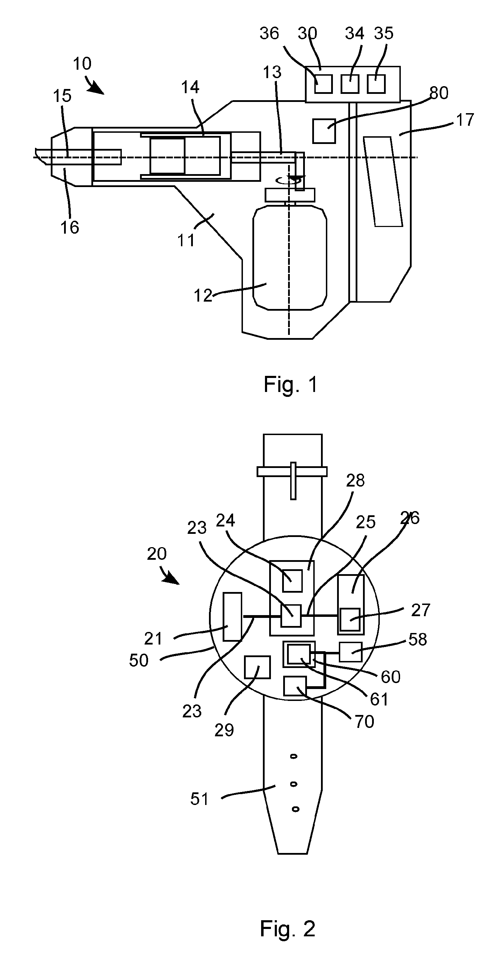

Fig. 1 zeigt eine beispielhafte schlagende Handwerkzeugmaschine 10. In einem Maschinengehäuse 11 sind ein Motor 12, ein Antriebstrang 13 und ein pneumatisches Schlagwerk 14 integriert. Das pneumatische Schlagwerk 14 schlägt periodisch auf ein Werkzeug 15, das in einer Werkzeugaufnahme 16 an der Handwerkzeugmaschine 10 gelagert ist. Die periodischen Schläge führen zu einer Vibration. Die Vibration überträgt sich zumindest teilweise auf einen Handgriff 17, mittels dem ein Anwender die Handwerkzeugmaschine 10 führt. Die Vibrationen führen zu einer erheblichen physischen Belastung des Anwenders, die insbesondere bei einer Dauerbelastung zu Schädigungen der Hände, Armgelenke und Arme führen kann.

In anderen Handwerkzeugmaschinen können die Vibrationen durch oszillierende oder drehende Werkzeuge entstehen. Die Vibrationen können auch in Folge einer Wechselwirkung von Handwerkzeugmaschine und einem zu bearbeitenden Werkstück auftreten.

Fig. 2 zeigt ein Dosimeter 20, das ein Anwender am Arm, vorzugsweise am Handgelenk, tragen kann. Ein Gehäuse 50 des Dosimeters 20 ist beispielsweise mit einem Band 21, einer Manschette und/oder einem Klipp (nicht dargestellt) versehen. Das Band 21 ist beispielsweise als Armband ausgestattet. Der Anwender befestigt das Dosimeter 20 mittels des Bandes 51 gleich einer Uhr an seinem Handgelenk. Vorzugsweise trägt der Anwender das Dosimeter 20 an der Hand mit der er/sie die Handwerkzeugmaschine 10 führt. Das Dosimeter kann auch am Unter- oder Oberarm getragen werden. Ein direkter Kontakt des Dosimeters 20 zu der Handwerkzeugmaschine 10 ist nicht erwünscht.

In einer Ausführungsform beinhaltet das Dosimeter 20 einen oder mehrere Beschleunigungssensoren 21 in seinem Gehäuse 50. Die Beschleunigungssensoren 21 erfassen die Vibrationen, die von der Handwerkzeugmaschine 10 über die Hand auf den Arm des Anwenders übertragen werden. Eine Auswertungseinrichtung 28 des Dosimeters 20 bestimmt basierend auf den erfassten Vibrationen, ob der Anwender eine im schlagenden Betrieb befindliche Handwerkzeugmaschine führt. Die Auswertungseinrichtung 28 erkennt folglich, dass der Anwender einer Belastung durch Vibrationen ausgesetzt ist. Eine Zeiterfassungseinrichtung 26 bestimmt die Dauer der Belastung.

Die Auswertungseinrichtung 28 kann beispielsweise einen Diskriminator 23 enthalten, der die von dem Beschleunigungssensor 21 ausgegebenen Vibrationssignale 22 mit einem Schwellwert vergleicht. Der Schwellwert kann in einem Speicherelement 24 des Dosimeters 20 gespeichert oder in einer anderen geeigneten Weise permanent oder veränderbar hinterlegt sein. Der Schwellwert ist derart gewählt, dass typische Erschütterungen und Vibrationen von Handwerkzeugmaschinen im schlagenden Betrieb den Schwellwert überschreiten. Der Diskriminator 23 gibt ein Triggersignal 25 ansprechend auf ein Unter- oder Überschreiten des Schwellwerts durch das Vibrationssignal 22 aus. Der Zeiterfassungseinrichtung 26 des Dosimeters 20 wird das Triggersignal 25 zugeführt. Die Zeiterfassungseinrichtung 26 erfasst eine Zeitspanne für die das Vibrationssignal 22 den Schwellwert überschreitet. Die Zeiterfassungseinrichtung 26 kann beispielsweise ein Speichermodul 27 enthalten, in das die jeweiligen Zeitspannen gegebenenfalls mit Datum und Uhrzeit abspeichert werden.

In dem Dosimeter 20 kann eine einfache Analyseeinrichtung 58 vorgesehen sein, die beispielsweise die Summe der Zeitspannen über den aktuellen Tag, die letzte Stunde oder ein anderes Intervall bestimmt. Eine Anzeige 29 zeigt dem Anwender beispielsweise die Summe als Maß für die jeweiligen über das Intervall akkumulierten Vibrationen an. Die Anzeige 29 kann beispielsweise ein akustisch, optisch oder haptisch erfassbares Warnungsignal ausgeben, wenn eine Maximalbelastung erreicht oder überschritten wird.

Eine weitere Ausgestaltung des Dosimeters 20 ermittelt aus der Dauer der erfassten Vibrationen eine normierte Belastung. Handwerkzeugmaschinen 10 weisen eine für sie jeweils typische Kenngröße hinsichtlich ihrer Vibrationsbelastung für einen Anwender auf. Die typische Kenngröße kann in standardisierten Tests bestimmt und beispielsweise als am Handgriff auftretende Beschleunigungswerte angegeben werden.

Das Dosimeter 20 kann eine Eingabevorrichtung 70 aufweisen, über die der Anwender die für eine Handwerkzeugmaschine 10 typischen Kenngrößen eingeben kann. Die Analyseeinrichtung 58 des Dosimeters 20 ermittelt aus den Zeitspannen und der eingegebenen Kenngröße eine aktuelle normierte Belastung.

Ein Transponder 30 mit einem RFID (Radio Frequency IDentification)- Chip 36 kann an oder in der Handwerkzeugmaschine 10 befestigt, z.B. angeklebt werden. Der RFID-Chip 36 speichert permanent eine Kennung, die eine typische Kenngröße über die Vibrationsbelastungen einer Handwerkzeugmaschine angibt. Die typische Kenngröße kann beispielsweise als ein Beschleunigungswert an dem Handgriff der Handwerkzeugmaschine angegeben werden. Es können verschiedene RFID-Chips 36 für vielfältige Kenngrößen bereitgestellt werden. Für jede Handwerkzeugmaschine 10 kann ein entsprechender RFID-Chip 36 ausgewählt und die Handwerkzeugmaschine damit, auch nachträglich, ausgestattet werden. Das Dosimeter 20 beinhaltet eine entsprechende Leseeinheit 60 für den Transponder 30 zum Empfangen der typischen Kenngröße der Handwerkzeugmaschine 10. Die übermittelte Kenngröße kann das Dosimeter 20 in dem Speicherelement 24 speichern. Die Analyseeinrichtung 58 greift auf die gespeicherte Kenngröße zurück und ermittelt anhand der erfassten Dauer der Belastung und der Kenngröße eine normierte Belastung. Die normierte Belastung kann aufgezeichnet und/oder angezeigt werden.

Der Transponder 30 kann durch das Dosimeter 20 gesteuert werden. Die Leseeinheit 60 weist einen Emitter 61 auf, der ein auf den Transponder 30 abgestimmtes elektromagnetisches Hochfrequenzsignal ausgibt. Der Transponder 30 übermittelt ansprechend auf das Hochfrequenzsignal die in dem RFID-Chip 36 gespeicherte Kenngröße. Die Leseeinheit 60 kann beispielsweise zeitgesteuert, z.B. alle 30 Minuten, den Transponder 30 auslesen. Ein Auslesen kann beispielsweise erfolgen, wenn das Dosimeter erstmals nach einer vorgegebenen Zeitspanne, z.B. 10 Minuten, eine Vibration erfasst. Ein möglicher Wechsel eines Handwerkzeuggeräts während einer Arbeitspause könnte hierdurch erfasst werden.

Der Transponder 30 ist vorzugsweise ein passiver Transponder 30 ohne integrierte Batterie oder eine drahtgebundene Energieversorgung. Der Transponder 30 enthält hierfür eine Empfängerspule 34 und einen Kondensator 35. Das von dem Emitter 61 ausgesandte Hochfrequenzsignal dient der Energieversorgung. Die Empfängerspule 34 wandelt das Hochfrequenzsignal induktiv in elektrische Ladungen, die in dem Kondensator 35 gepuffert werden. Das Hochfrequenzsignal wird ausreichend lange ausgestrahlt, um den RFID-Chip 36 mit elektrischer Energie zum Aussenden der in ihm gespeicherten Kenngröße zu versorgen.

Der Transponder 30 kann auch durch eine Erregerspule 80 in der Handwerkzeugmaschine 10 induktiv mit Strom versorgt werden. Die Erregerspule 80 kann eine zusätzliche Spule sein. Alternativ können z.B. die elektromagnetischen Felder des Motors 12 zur Energieversorgung herangezogen werden. Insbesondere kann der Transponder 30 die Kenngröße übertragen, wenn der Motor 12 sich dreht, d.h. die Handwerkzeugmaschine 10 aktiv ist.

Der RFID-Chip 36 ist ein Beispiel für einen drahtlosen Transponder. Alternativen sind optische Transponder, Ultraschalltransponder oder Transponder in einem höheren oder niederen Frequenzbereich.

## Patentansprüche

1. Dosimeter (20) zur Vibrationserfassung, insbesondere für schlagende Handwerkzeugmaschinen, mit einem Gehäuse, einem Befestigungsmittel zum Befestigen des Beschleunigungssensors (21) am Arm, insbesondere am Handgelenk, eines Anwenders, wenigstens einem Beschleunigungssensor (21) in dem Gehäuse (50) und einer Aufzeichnungseinheit (26) zum Aufzeichnen einer Belastung des Anwenders basierend auf durch den Beschleunigungssensor erfasster Vibrationen.

2. Dosimeter (20) nach Anspruch 1, **gekennzeichnet durch** eine Auswertungseinrichtung (28) zum Vergleichen erfasster Vibrationen mit einem Schwellwert und eine Zeiterfassungseinrichtung (26) zum Aufzeichnen einer Dauer für die die Vibrationen größer als der Schwellwert sind.

3. Dosimeter (20) nach Anspruch 2, **gekennzeichnet durch** ein drahtloses Empfangsmodul (60) zum Empfangen einer Kenngröße und eine Analyseeinrichtung (58) zum Ermitteln einer normierten Belastung basierend auf der empfangenen Kenngröße und der Dauer für die die Vibrationen größer als der Schwellwert sind.

4. Dosimeter (20) nach Anspruch 3, **dadurch gekennzeichnet, dass** das drahtlose Empfangsmodul (60) eine Leseeinheit (61) für einen RFID-Chip beinhaltet.

5. Dosimeter (20) nach Anspruch 3 oder 4, **dadurch gekennzeichnet, dass** die Aufzeichnungseinheit (26) eine Speichereinheit zum Speichern der Dauer und der empfangenen Kenngröße aufweist oder zum Speichern einer von der Analyseeinrichtung (58) ermittelten normierten Belastung.

6. Dosimeter (20) nach einem der vorhergehenden Ansprüche, **gekennzeichnet durch** eine Anzeige zum Anzeigen der aufgezeichneten Belastung.

7. Verfahren zum Erfassen einer Vibrationsbelastung mit den Schritten.
Erfassen von Beschleunigungswerten am Arm, insbesondere Handgelenk, eines Anwenders;
Ermitteln einer Dauer, für die die Beschleunigungswerte einen Schwellwert überschreiten und
Aufzeichnen der Dauer.

8. Verfahren nach Anspruch 7, **gekennzeichnet durch** die weiteren Schritte:
Auslesen eines RFID-Chips mit einer für eine Handwerkzeugmaschine zugehörigen Kenngröße über deren Vibrationsbelastung;
Bestimmen einer Dosis der Vibrationsbelastung **durch** die Vibration basierend auf der aufgezeichneten Dauer und der ausgelesenen Kenngröße.
